# EUROPEAN PATENT APPLICATION

(11) **EP 3 289 878 A1**
(43) Date of publication of application: **07.03.2018**
(21) Application number: 16382408.9
(22) Date of filing: 31.08.2016
(51) Int. Cl.: A01N 63/00, A01N 63/04, A01P 21/00

(54) **METHOD FOR PRODUCING AN ORGANIC SUBSTRATE FOR PROMOTING GROWTH DURING PLANT GERMINATION AND DEVELOPMENT, AND ORGANIC SUBSTRATE**

(71) Applicant: Microgaia Biotech, S.L., 30100 Murcia (ES); Symbiom sro., 563 01 Lanskroun (CZ)
(72) Inventor: Sánchez López, Cristobal, 30100 Murcia (ES); Pascual Valero, José Antonio, 30100 Murcia (ES); Vosátka, Miroslav, 563 01 Lanskroun (CZ); Látr, Ale, 563 01 Lanskroun (CZ); Gianinazzi, Silvio, 21000 Dijon (FR)
(74) Representative: Sahuquillo Huerta, Jesús

(57) **Abstract**

Method for producing an organic substrate for promoting growth during plant germination and development and organic substrate. Method for producing an organic substrate comprising starting composting of vineyard pruning residues, adding chitin to the vineyard pruning residues, inoculating a strain of the microorganism *Trichoderma harzianum* and inoculating species from the genus *Glomus.*

## Description

### FIELD OF THE INVENTION

The present invention refers to the production of an organic substrate for promoting growth during plants germination and development. Particularly, said method comprises composting of vineyard pruning residues, chitin addition, a strain from the microorganism *Trichoderma harzianum* and a mixture of species from the genus *Glomus.*

### BACKGROUND OF THE INVENTION

A substrate is, by definition, any means used for growing plants in a container. The use of substrates in vegetable production has undergone a considerable increase in the last decades, both for economic and agronomic or even environmental reasons.

On the other hand, an organic amendment is any type of organic material capable of improving the quality of the soil and of the crop being produced therein, since it provides part of the necessary nutrients, as well as improving the soil properties.

Evolution of organic substrates and amendment has been more than evident in recent times, with a greater quality being demanded thereto each time, as well as particular functionalities, expecting of them less dependence on external inputs. Therefore, the field of application, both as substrates and as organic amendments, has been broadened. In the first case, it can be highlighted the use thereof for millions of seedlings in such a technified area as that of seedbeds, wherein seedlings are produced from seeds on the minimum existing volume of organic substrate. In this case, peat has been employed as reference material, but this has several drawbacks, from environmental ones, as import thereof is required, to the overpricing this type of material involves, and the batch heterogeneity depending not only on the origin but also on the batch itself. On the other side, there has been an increase in the soilless crop technique itself, for which coconut fibre and perlite are used, which although providing a good response, also features several problems such as dependence of import thereof and difficulty of removal after being used. The organic amendments are another aspect which is being innovated, wherein there is a tendency of producing them specifically for a concrete purpose, that of improving yields, either in a direct manner by improving the soil characteristics, or directly by contributing with elements which are critical for the crop such as nutrients or microorganisms capable of mobilize nutrients, referred to as bio-fertilizers and bio-stimulators.

The increased demand thereof produces a growing sensitivity towards depletion of non-renewable sources and environmental degradation. This growing demand of organic substrates makes compost be considered for use thereof as organic substrate, although not all composts may be used as substrate, as these must comply with the minimum requirement of allowing the suitable growth of the crops being developed therein.

Using pruning residues from the main ligneous crops has environmental implications which can be negative, as in the case of firings; or positive, as it is the case of utilization of the physical, physicochemical, chemical and biological characteristics thereof for it to be used as organic substrate, as an alternative to peat, or organic amendment on the soil. For this purpose, this type of material must undergo a composting process consisting of stabilization of the organic matter thereof and the subsequent removal of those phytopathogenic microorganisms which may exist in the vegetable material that is used. Furthermore, the advantage of handling a vegetable residue from the origin thereof until obtaining the final product by means of composting may increase the beneficial properties it features, resulting in functional and/or controlled composts. In this respect, depending on the substrate requirements, the physical, physicochemical and biological characteristics thereof may be directed towards different purposes, such as plant disease control, improvement of the bio-stimulating and/or bio-fertilizing capacity.

Most of the composts are provided with a high content of organic matter, which by natural decomposition allows using thereof as organic amendments with gradual fertilizing capacity, when the organic matter therein decomposes and thus releases nutrients that may be used by plants. Furthermore, depending on their origin and composition, these can have a suppressive effect against disease, although this is a partial and erratic effect, being the use thereof difficult for this purpose. However, in the last times, and given the pressure on handling plant health products, it has regained special attention. Also, composts such as or in combination with peats have started to be used as substrates for plant crops, although external application of chemical fertilizers and pesticides is still required.

The use of chitin as adjuvant during the composting process has the effect of making the establishment of the T78 microorganism easier, such as it was defined in patent ES 2360318.

There is a patent describing the production of a supressing substrate by incorporating a strain of *Trichoderma hamatum* together with *Flavobacterium balustinum* (US 4,900,348). US 4,642,131, describes a method in which *Trichoderma hamatum* is used in combination with bacteria. However, none of both patents describes the potential use thereof as a growth enhancer, focusing on disease control. On the other hand, there is a patent, ES 2188385, consisting of the addition of conidia from the *Trichoderma hamatum* T34 strain to substrates formulated from compost, peats and other materials mixtures, although since it is a physical mixture of an organic material with a microorganism, without enhancing, in any way, the establishment of the microorganism in the organic material, thereby the survival capacity and stability thereof is very limited. It neither refers to the potential bio-stimulating and/or bio-fertilizing effects of the substrate, without affecting the action of the product thereof on melon crops at a seedbed level. On previous studies, immobilization of T78 is proposed to be performed by using an inorganic material and other additional factors for disease control such as vascular Fusarium, the use thereof being comparable to the punctual application of a biological control fungicide, or preparation of substrates as that from the previous patent.

There are also studies in which mycorrhizae are intended to improve the establishment of a radicular system that allows a better conditioning and resistance of the mycorrhized plant, producing a saving of nutrients on the one side, and a greater vegetable growth. In this sense, incorporating mycorrhizae together with organic materials have provided varied results depending on the strain and the type of compost to be used. The use of beneficial microorganisms such as the T78 strain showing a better degree of mycorrhization in tomato plants, have been carried out successfully in some studies, although it depends on the strain of Trichoderma to be used, as well as the *mycorrhiza* strain.

There are no studies in which the combination of composting pruning residues has been done by sequentially incorporating elements which finally result in biotized organic substrate. The elements being incorporated in the process sequentially make it easier for the next element to establish, being chitin the first one which, once incorporated and partially naturally decomposed, allows success of inoculation and establishment of T78, which once incorporated and established allows or makes it easier for the AMFS to be incorporated, resulting in the biotized substrate, object of this patent.

Therefore, a substrate as that proposed in the present invention, intended from the origin thereof for being an ecological and nutritional niche of specific microorganisms, and directionally produced for that purpose, without prejudice to compliance of the physicochemical parameters of a standard substrate, may be considered as a new product.

### DESCRIPTION OF THE INVENTION

In a first aspect, the present invention provides a method for elaborating an organic substrate for promoting growth during plants germination and development, comprising:
(a) starting composting of vineyard pruning residues,
(b) adding chitin to the vineyard pruning residues during the composting thermophilic phase.
(c) inoculating a strain of the *Trichoderma harzianum* microorganism to the product resulting from the previous step once the composting thermophilic phase has finished, and
(d) inoculating a mixture of species of the genus *Glomus* to the product resulting from the previous step during the composting maturing step.

Another embodiment consists of the method according to the first aspect of the invention, wherein the *Trichoderma harzianum* / mixture of species from the genus *Glomus* ratio is 1:1.

Another embodiment consists of the method according to the first aspect of the invention, wherein the strain of the microorganism *Trichoderma harzianum* is the strain *Trichoderma harzianum* T78 identified by the deposit number CECT 20714 and by the mixture of species from the genus *Glomus* being a mixture of the species *Glomus intraradices, Glomus claroideum, Glomus mosseae* and *Glomus etunicatum.*

The organic cultivation substrate is suitable for vegetable seedlings development at seedbeds, soilless culture and incorporating organic amendment onto the cultivation soil, inoculated with microorganisms providing it with bio-stimulating and/or bio-fertilizing capacity.

Combination of species being part of the inoculum and the proportional relationship thereof, the moment and the method of incorporating the different elements result in bio-stimulating and/or bio-fertilizing functionalities in a stable and persistent manner in the substrate.

The present invention provides an organic substrate being suitable for plants development and growth in seedbeds, in soilless cultures and for being applied as organic amendments in intensive horticulture.

The organic substrate is capable of substituting the traditional substrates in soilless culture such as peat or coconut fibre, as well as organic amendments having a high added value. The organic substrate is characterized in that it has properties which are additional and specific to the commercially available substrates, mainly bio-stimulating and bio-fertilizing capacity.

The present invention provides an organic substrate, functionally biotized, for technified agricultural production, such as germination and development of vegetable seedlings in seedbeds and the production in soilless culture. This substrate is also suitable for use thereof as organic amendment in cultivation soils. Use thereof improves harvest yields of the assayed crops, which must be attributed to the synergistic effect and to the whole specific combination being used.

The vegetable material selected for elaborating thereof was vineyard pruning residues, since it turned out to be the most suitable material for developing the properties intended to be enhanced in the new substrate (bio-stimulating and bio-fertilizing activity) due to the adequate establishment of the microorganisms described.

The cultivation substrate object of the present invention incorporates chitin. The presence of chitin during the bio-stabilization process of the vineyard pruning residues, by means of composting, as well as contributing in providing nitrogen, thus reducing the C/N ratio and thus favouring the bio-stabilization of the organic material, acts as an activation inducer and nutritional source of the *Trichoderma harzianum* T78 strain; the latter, inoculated at the suitable stage of composting so as to secure stable establishment thereof, will favour the action of the mixture of species from the genus *Glomus,* increasing the mycorrhization rates thereof during plant cultivation into the substrate, producing significant improvement of the assayed harvest yields.

In the method of the first aspect of the invention, chitin is applied after the first peak of the thermophilic phase, taking advantage of the necessary turnover, the *Trichoderma harzianum* T78 strain is incorporated at the end of this phase of the composting process, and the mixture of species of the genus Glomus is inoculated during the maturing stage of the process and prior to the refining of the final material being obtained. Using the product being obtained produces an improvement in the assay crops, having a lower need of chemical inputs (synthetic fertilizers and pesticides), thus contributing to a sustainable agriculture, environmentally and health friendly. Furthermore, the starting material of this substrate, vineyard pruning residues, would change from being a "residue" into being a "resource", being economically valuable which allows providing it with a suitable environmental application, thus avoiding the problems of removal thereof by indiscriminate firing. At the same time, this renewable resource contributes to reducing the requirements of use of substrates coming from non-renewable resources such as peats.

In a second aspect, the present invention provides an organic substrate which can be obtained according to the method of the first aspect of the invention.

In a third aspect, the present invention provides an organic substrate according to the second aspect of the invention for use thereof in promoting growth during plant germination and development.

Another embodiment consists of the organic substrate of the third aspect of the invention, wherein said plants are grown in soil crops or soilless cultures.

### BRIEF DESCRIPTION OF THE DRAWINGS

Figure 1. Fresh weight of corn plants treated with the different combinations of mycorrhiza and Trichoderma harzianum strains.
Figure 2. Dry weight of corn plants treated with the different combinations of mycorrhiza and Trichoderma harzianum strains.
Figure 3. Fresh weight of tomato plants treated with the different combinations of mycorrhiza and Trichoderma harzianum strains.
Figure 4. Dry weight of tomato plants treated with the different combinations of mycorrhiza and Trichoderma harzianum strains.
Figure 5. Average height in centimetres per seedling, of the of the 300 melon seedlings from each treatment assayed in seedbeds with different substrates and mixtures thereof.
Figure 6. Average dry weight in grams per seedling, of the of the 300 melon seedlings from each treatment assayed in seedbeds with different substrates and mixtures thereof.
Figure 7. Average height in centimetres per seedling, of the of the 300 onion seedlings from each treatment assayed in seedbeds with different substrates and mixtures thereof.
Figure 8. Average dry weight in grams per seedling, of the of the 300 onion seedlings from each treatment assayed in seedbeds with different substrates and mixtures thereof.
Figure 9. Average height in centimetres per seedling, of the of the 300 pepper seedlings from each treatment assayed in seedbeds with different substrates and mixtures thereof.
Figure 10. Average dry weight in grams per seedling, of the of the 300 pepper seedlings from each treatment assayed in seedbeds with different substrates and mixtures thereof.
Figure 11. Total weight in grams per treatment, of the 9 plants from each treatment for tomato yield being assayed in soilless crops with different organic substrates and mixtures thereof.
Figure 12. Average weight in grams per fruit, of one fruit (unit) from each treatment for tomato yield being assayed in soilless crops with different organic substrates and mixtures thereof.

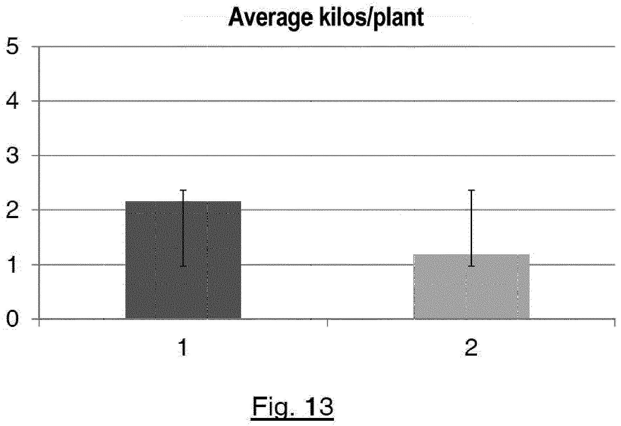

Figure 13. Average weight in kilos of grapes per plant, of the production of the 96 plants from each treatment assayed in vineyard crops (3^{rd} year after being planted).

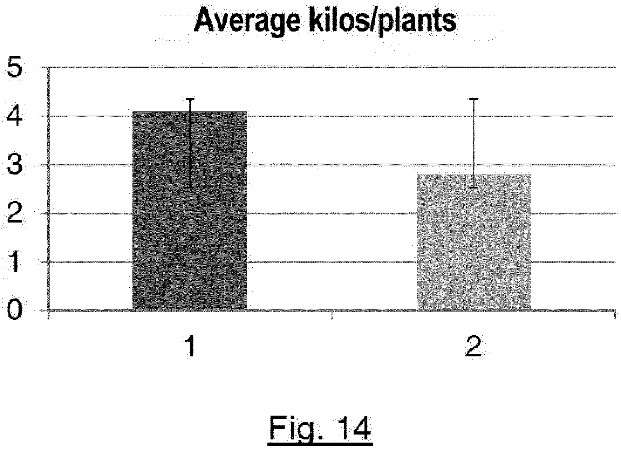

Figure 14. Average weight in kilos of grapes per plant, of the production of the 96 plants from each treatment assayed in vineyard crops (4^{th} year after being planted).

### DESCRIPTION OF EMBODIMENTS

### EXAMPLE 1

### Determination of the combination of species and proportional relationship thereof for obtaining a substrate having bio-fertilizing and bio-stimulating capacity derived from a synergistic microbial activity which increases mycorrhization rates of the grown plants.

Factorial study of different mycorrhizae and Trichoderma sp species and strains on corn and tomato crops, assessing the mycorrhization degree and content of Trichoderma harzianum colony forming units.

The object of this activity was to select different mycorrhizae (AMFs) and Trichoderma strains, which, a priori, because of the characteristics thereof, feature characteristic effects of the genus they belong to, that is, that a priori feature survival and action capability under field conditions.

### Microorganisms selection

For this purpose, two pools of AMFs (AMF1 and AMF2) strains were provided, which had been immobilized in zeolite, a characteristic means in the immobilization of this microorganism. On the other hand, three different strains of the genus Trichoderma were provided. These were selected by the capacity thereof for resisting under conditions of low organic material content and low hydric content, habitual conditions in fields. The strains being selected were T38, T55 and T78 strains immobilized in clay, in this case bentonite.

The number of viable spores for each one of the three Trichoderma strains was determined by means of culture in PDA-rose bengal. The number of spores was about 10(7) UFC per gram, with no difference existing depending on the Trichoderma starting strain.

### Experiment-corn plant crop

Once having selected both the two mycorrhizae and the three Trichoderma strains, 5 L containers were prepared which were filled with agricultural soil, previously sterilized so as to avoid natural mycorrhization effects which may hinder observation of the interaction to be studied. A corn seed was planted in each container, as it is very sensitive to the mycorrhization effect; for that purpose, a little hole was done in the centre of the pot, placing 5 grams of the mycorrhiza preparation and 1 gram of each of the Trichoderma preparations, placing them on top of the seed, covering it with the soil and watering it by immersion of the containers on water trays, so that water humidifies the soil by capillarity and thus avoiding the possible washing out of the biological material inoculated. After 5 hours under immersion and when water was observed to have reached the surface, it was randomly spread out in a greenhouse. Each one of the treatments consisted of 10 repetitions, so that the results were statistically valid.

The established treatments were as follows:

**Table 1. Combinations of strains T. harzianum-pool of assayed mycorrhizae**

| | | |
|---|---|---|
| AMFS T78 | AMFS2 T78 | T78 |
| AMFS T55 | AMFS2 T55 | T55 |
| AMFS T38 | AMFS2 T38 | T38 |
| AMFS | AMFS2 | control |

Containers were at disposal for 45 days, after which they were removed, proceeding with measurement of the fresh weight and dry weight of the corn plants, Trichoderma count and mycorrhization percentage calculation.

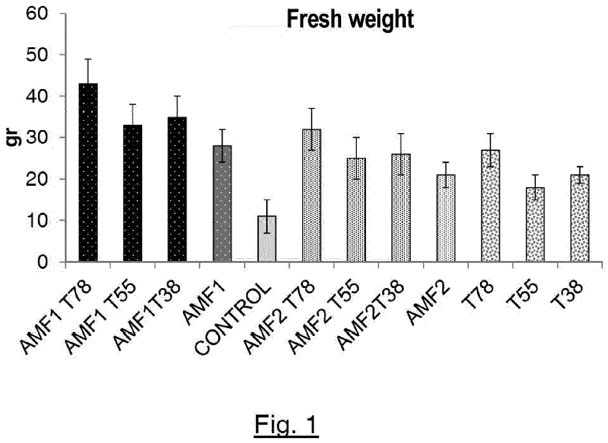

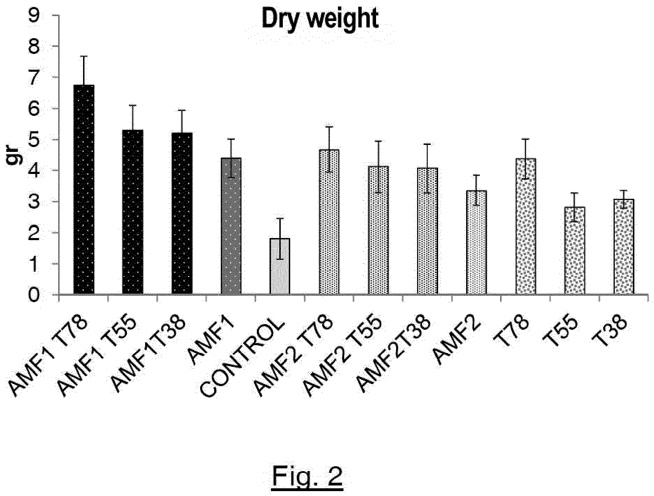

This study resulted in the conclusion that the three Trichoderma strains would produce an increase of the plants growth, being this higher in the case of T78 strain with respect to the other two (Figure 1 and 2). Regarding the mycorrhizae, it is indicated how the AMF1 did show an increase in the corn plant growth as compared to the control, although the increase was less than that of the samples including the T78 strain. Table 1 show the mycorrhization percentages and levels of Trichoderma harzianum T78 of the different treatments; among those, it is highlighted how the mycorrhization percentages were absent in the control soil and in the treatments only including Trichoderma; however, when they incorporated mycorrhiza, either AMFs or AMFs2, they showed a mycorrhization which in general was enhanced in treatments where Trichoderma was included, especially in those wherein the Trichoderma treatment included was T78, as in the case of AMFs2 and combinations thereof with Trichoderma; inoculation of AMFs did show significant levels of mycorrhization percentage, which were increased by the presence of the different Trichoderma strains, although to a lesser extent than the AMFs2. The highest mycorrhization levels and the biggest size in the plant were shown in the AMFs-T78 association.

**Table 2. Mycorrhization percentage and colony forming units of the different Trichoderma harzianum strains used in the association for corn crops.**

| | Mycorrhization percentage | Standard Deviation | Trichoderma log (ufc / g) | Standard Deviation |
|---|---|---|---|---|
| AMFS T78 | 75 | 8 | 4.48 | 0.09 |
| AMFS T55 | 56 | 7 | 4.30 | 0.08 |
| AMFS T38 | 59 | 7 | 4.00 | 0.03 |
| AMFS | 53 | 6 | 0.00 | 0.00 |
| Control | 0 | 0 | 0.00 | 0.00 |
| AMFS2 T78 | 66 | 6 | 4.48 | 0.07 |
| AMFS2 T55 | 50 | 4 | 4.30 | 0.09 |
| AMFS2 T38 | 53 | 7 | 4.30 | 0.20 |
| AMFS2 | 42 | 5 | 0.00 | 0.00 |
| T78 | 0 | 0 | 5.70 | 0.41 |
| T55 | 0 | 0 | 4.48 | 0.10 |
| T38 | 0 | 0 | 5.00 | 0.10 |

### Experiment-tomato plant crop under controlled conditions at seedbed

This assay on tomato crops was carried out under same variables than in the previous assay, with the purpose of realizing a contrasted selection, not only with one crop. This assay was performed at seedbed level, using the habitual seedbed containers having 150 seed cells per treatment, taking 50 plants from each tray calculating the means thereof, making for each of the treatments 5 replicates consisting of 5 trays. In this case, the seed cells were filled with usual peat moss for seedling germination in seedbeds, and in each one of them the equivalent of each one of the microorganisms at a ratio being equivalent to 0.3 g of mycorrhiza per 0.1 g of Trichoderma per seed.

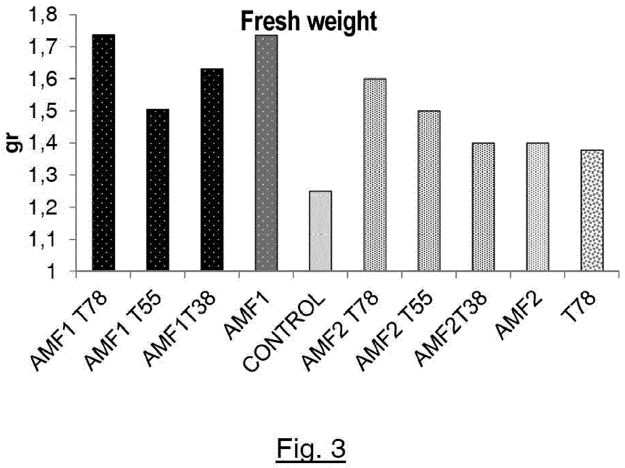

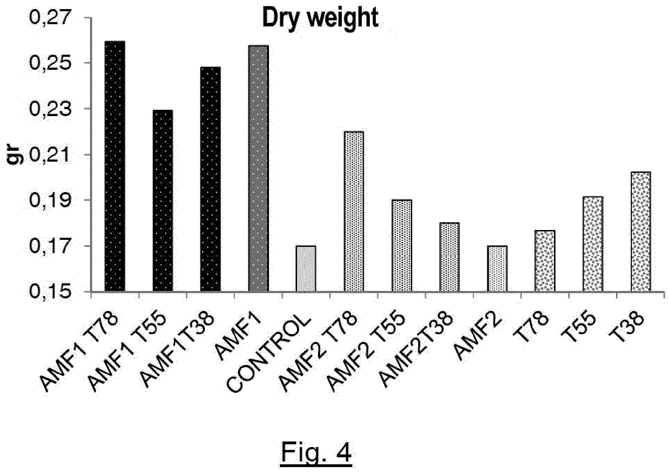

The results shown were equivalent to those observed in the previous assay, with the exception that in this case there were much lower levels of mycorrhization than in the case of the corn, since this crop is less sensitive to mycorrhization, and also because this first assay was carried out in seedbeds, the containers of which are small, wherein this can influence on the mycorrhization effect, or on the contact time not being enough in the case of the seedbed. It is established that the minimum time to observe an adequate mycorrhization is about 50 days, and in these cases permanence time in the seedbeds was less than 30 days. Regarding the type of mycorrhiza, again the treatments with AMF showed better mycorrhization results than AMF2 (Table 2), as well as higher fresh weight and dry weight of the tomato plants, this being assessed at the moment when transplantation into field was to be performed (Figures 3 and 4).

**Table 3. Mycorrhization percentage and colony forming units of the different strains of Trichoderma harzianum used in the association for the tomato crop at the seedbed.**

| | Mycorrhization percentage | Standard Deviation | Trichoderma log (ufc / g) | Standard Deviation |
|---|---|---|---|---|
| AMFS T78 | 38 | 4 | 4.48 | 0.10 |
| AMFS T55 | 18 | 3 | 4.30 | 0.10 |
| AMFS T38 | 17 | 2 | 4.00 | 0.08 |
| AMFS | 28 | 4 | 0.00 | 0.00 |
| Control | 0 | 0 | 0.00 | 0.00 |
| AMFS2 T78 | 22 | 2 | 3.48 | 0.07 |
| AMFS2 T55 | 20 | 2 | 3.30 | 0.09 |
| AMFS2 T38 | 22 | 2 | 4.00 | 0.09 |
| AMFS2 | 17 | 3 | 0.00 | 0.00 |
| T78 | 0 | 0 | 5.65 | 0.41 |
| T55 | 0 | 0 | 4.45 | 0.03 |
| T38 | 0 | 0 | 5.00 | 0.09 |

The AMF also showed a better synergy with the Trichoderma strains than AMF2. The best results regarding size of the plant, nutritional state and mycorrhization percentage were for the AMF-T78 combined treatment.

The combination of mycorrhiza AMF and the *Trichoderma harzianum* T78 strain showed the best growth rates in corn and tomato plants, as well as being those showing the lowest antagonism between each other.

### EXAMPLE 2

### Obtaining an organic substrate from vineyard pruning residues by means of the sequential inoculation of chitin, T. harzianum T-78 and AMFS during the composing process thereof.

Once the combination of T. harzianum and AMFs is established, the method for inoculating them in a stable way and in enough concentration during vineyard pruning residues composting process.

At the end of the thermophilic phase of the composting process of the vine shoots the T. harzianum T-78 isolate is inoculated, with a 45% humidity made up of a suspension mixture of spores thereof, obtained under the following ratio: 1 millilitre of the spore suspension obtained from scrapping the culture in a Petri dish of T. harzianum T-78, being equivalent to 10(9) UFC/mL spore concentration, 10 g of bentonite, 20 g of vermiculite and 25 mL of water.

After the maturing phase it is inoculated the AMFs pool, a mixture of 350 propagules/gram of the species *Glomus intraradices, G. claroideum, G*. *mosseae, G. etunicatum,* at a 1:1 ratio to the T. harzianum T-78 inoculum.

### EXAMPLE 3

### Validation of the use of biotized organic substrate for the seedbed assay

The biotized substrate was granulometrically added, so as to make the physical characteristics thereof similar to the culture substrates commonly used. Development of seedlings from several vegetable species was compared, under seedbeds conditions, among different commercial substrates, specific preparations for professional seedbeds and the biotized substrate object of the present invention. Both, pure products and mixtures of the conventional substrates were assayed at different ratios of the biotized substrate, according to treatments in the following table:

**Table 4. Different assayed culture substrate and mixtures**

| **Treatments** | **DESCRIPTION** |
|---|---|
| **1** | Commercial substrate ELMIR 100% |
| **2** | Commercial substrate + biotized substrate 50:50 (v/v) |
| **3** | Commercial substrate + biotized substrate 80:20 (v/v) |
| **4** | Moss peat 100% |
| **5** | Moss peat + biotized substrate 50:50 (v/v) |
| **6** | Moss peat + biotized substrate 80:20 (v/v) |
| **7** | Moss and black peat mixture (Projar) 100% |
| **8** | Moss and black peat mixture (Projar) + biotized substrate 50:50 (v/v) |
| **9** | Moss and black peat mixture (Projar) + biotized substrate 80:20 (v/v) |
| **10** | Biotized substrate 100% |

For each crop species two polystyrene trays were prepared having 150 seed cells of each of the different compositions, and they were divided into two sections. The type of seed cell employed is that being habitually used for specific vegetable culture in commercial seedbeds and these are cultivated under seedbed conditions, with irrigation and fertilization, the required time for each species, between 45 days in the case of melon and 60 days in the case of onions. At the end thereof, the dry weight and the height of the 300 seedlings from each treatment per species are determined.

Melon, onion and pepper crops were assayed.

**Table 5. Average dry weight and height of seedlings in the different assayed treatments.**

| Treatment | Melon (Figs. 5 and 6) | | Onion (Figs. 7 and 8) | | Pepper (Figs. 9 and 10) | |
|---|---|---|---|---|---|---|
| | Dry weight (g) | Height (cm) | Dry weight (g) | Height (cm) | Dry weight (g) | Height (cm) |
| 1 | 0.231 | 12.56 | 0.051 | 8.81 | 0.079 | 8.36 |
| 2 | 0.262 | 13.55 | 0.093 | 13.47 | 0.138 | 12.95 |
| 3 | 0.213 | 12.42 | 0.072 | 11.85 | 0.088 | 13.42 |
| 4 | 0.194 | 9.74 | 0.072 | 11.93 | 0.107 | 9.50 |
| 5 | 0.273 | 14.47 | 0.112 | 16.72 | 0.198 | 16.40 |
| 6 | 0.232 | 10.98 | 0.102 | 13.82 | 0.181 | 14.16 |
| 7 | 0.252 | 10.78 | 0.093 | 13.89 | 0.092 | 9.52 |
| 8 | 0.232 | 12.64 | 0.084 | 13.41 | 0.200 | 13.77 |
| 9 | 0.193 | 10.44 | 0.085 | 14.59 | 0.157 | 13.39 |
| 10 | 0.225 | 12.64 | 0.093 | 14.42 | 0.140 | 12.56 |

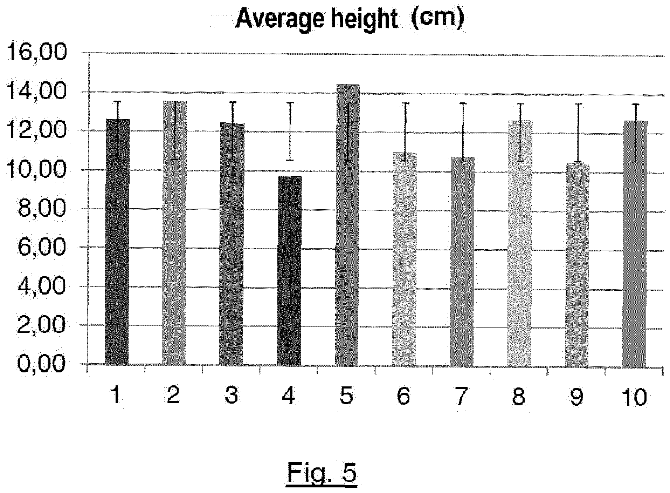

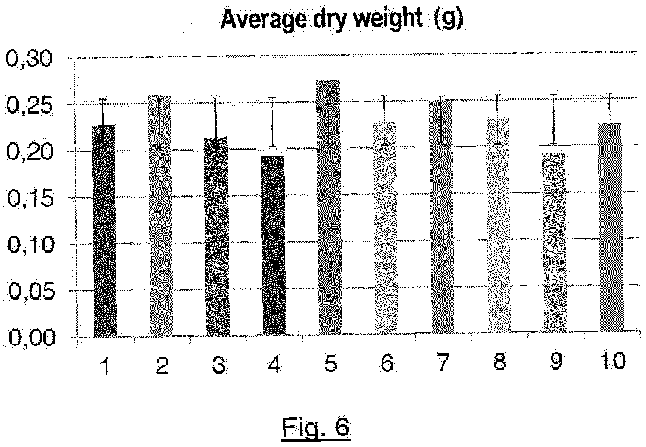

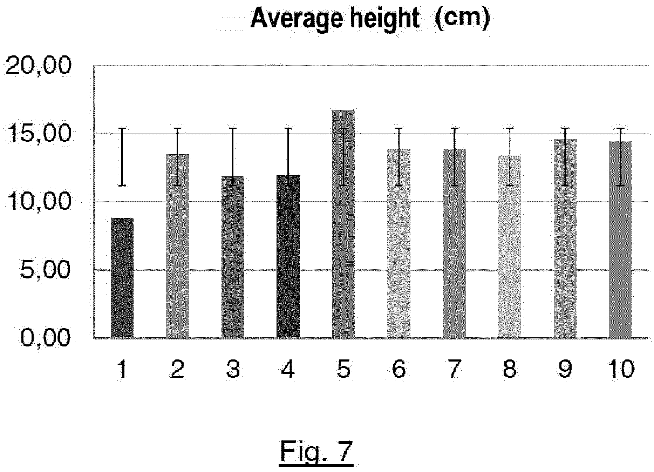

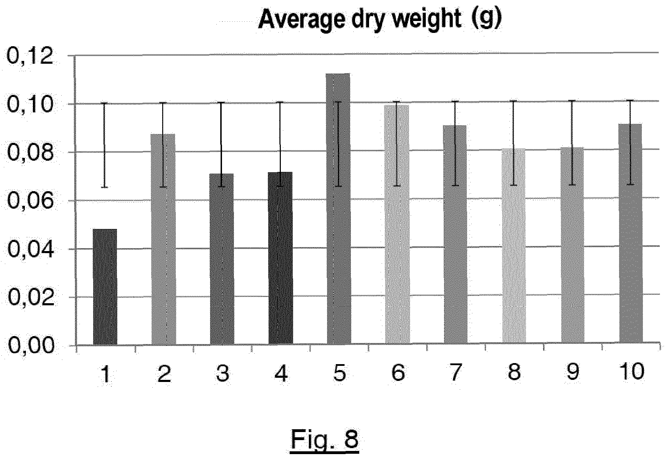

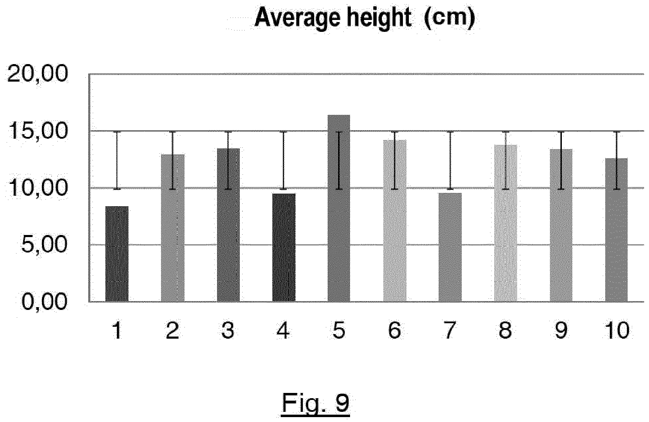

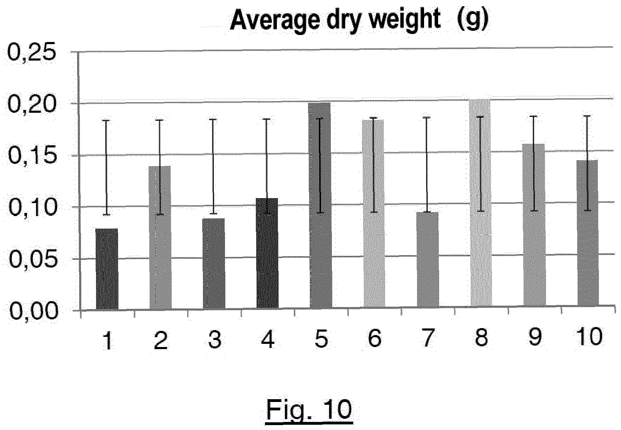

In all the cases, it is observed how treatments incorporating the biotized substrate showed a higher performance regarding dry weight and height compared to the traditional treatments (Figures 5 to 10), either being the specific one used for this seedbed culture, or the commercial mixture of moss and black peat or the moss peat itself. The most significant results were found in those where the biotized substrate was used mixed with moss peat or alone.

### EXAMPLE 4

### Validation of the use of the organic biotized substrate for a soilless culture assay

The biotized substrate was granulometrically conditioned, so as to make the physical characteristics thereof similar to the culture substrates commonly used. Production of a tomato (Optima variety) soilless culture in greenhouse in different organic commercial substrates and the biotized substrate object of the present invention were compared. It was assayed both in pure products, and in mixtures of the conventional substrates at different ratios of the biotized substrate, according to treatments from the following table:

**Table 6. Different assayed culture substrates and mixtures**

| **Treatments** | **DESCRIPTION** |
|---|---|
| **1** | Coconut Fibre |
| **2** | Coconut fibre + biotized substrate 50:50 (v/v) |
| **3** | Coconut fibre + biotized substrate 80:20 (v/v) |
| **4** | Black peat 100% |
| **5** | Black peat + biotized substrate 50:50 (v/v) |
| **6** | Black peat + biotized substrate 80:20 (v/v) |
| **7** | Biotized substrate 100% |

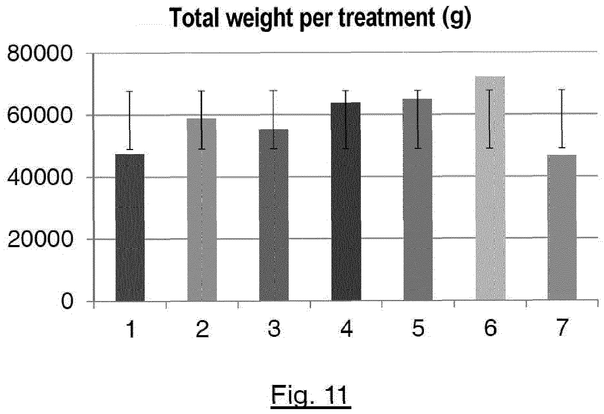

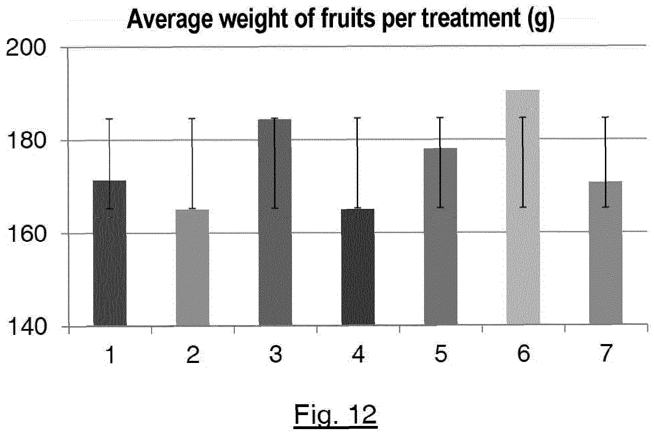

Each treatment consists of 9 plants, three culture bags having three plants each, randomly arranged in the greenhouse. The tomato crop lasted for 9 months. From month 3 the fruit was collected following the usual collecting criteria in soilless culture, being the usual to collect between two and three times per week during summer, and only once during winter; wherein fruits were collected periodically, being divided into 25 collections. Table 7 shows the number of fruits and the total weight produced in each treatment, whereas Figure 11 shows the total weight produced per each treatment and Figure 12 the average weight of the collected fruit.

From the results obtained, it should be noticed that the biotized substrate showed similar results to those of the coconut fibre, being lower to those obtained from the black peat. However, it is important to underline how the 20% ratio of the biotized substrate mixed with coconut fibre produced a significant increase in production.

In turn, combination of the biotized substrate with the black peat also showed, as well as an increased number of fruits, an increased weight thereof. This is a reflection of an increased quality and prize for the obtained fruits.

The differences being obtained must be attributed to the biotized compost effect, since in all the cases the irrigation was equivalent for all treatments. The best use of resources from the composts incorporating microorganisms was the cause for obtaining improved yields. The fact that the same production was obtained in the biotized compost than in the coconut fibre, and that it was significantly increased when it was added together with the coconut fibre, can be attributed to the fact the structure conferred by the coconut fibre is optimum, and incorporation of the biotized compost at the 20% ratio applied the optimum characteristics provided by the biotized compost.

**Table 7. Total weight and number of fruits from the harvest of the different treatments in tomato soilless culture.**

| TREATMENT | Total weight (Kg) | No of fruits |
|---|---|---|
| 1 | 47.41 | 276 |
| 2 | 58.75 | 356 |
| 3 | 55.09 | 299 |
| 4 | 63.81 | 387 |
| 5 | 64.95 | 365 |
| 6 | 71.95 | 378 |
| 7 | 46.52 | 273 |

### EXAMPLE 5

### Validation of the use of biotized organic substrate as organic amendment

The effect of the addition of biotized substrate as organic amendment was assayed at the planting moment of a vineyard, Macabeo variety, conducted into a vessel and under irrigation conditions. The following treatments are compared:

**Table 8. Treatments realized in vineyard crops.**

| **Treatments** | **DESCRIPTION** |
|---|---|
| **1** | Biotized substrate |
| **2** | Control. Black peat |

At the planting moment, it is added, into the planting hole, a kilogram of the amendment corresponding to each treatment, in 96 holes per treatment, randomly arranged. The culture conditions, from that moment on, are the same for the entire plot. Localized irrigation (2,000m3/Ha.), organic irrigation (NPK 8-4-10 solution), and preventive treatments using 98% micronized sulphur.

The production of two consecutive harvest was compared, corresponding to the third and fourth year of cultivation, when establishment thereof has already occurred.

**Table 9. Production means of the different treatments in years 3 and 4 after planting the vineyard.**

| TREATMENT | Average (Kg/plant) | |
|---|---|---|
| | Year 3 (Fig. 13) | Year 4 (Fig. 14) |
| 1 | 2.16 | 4.09 |
| 2 | 1.18 | 2.79 |

### REFERRENCE TO BIOLOGICAL MATERIAL DEPOSIT

The strain Trichoderma harzianum T78 has been deposited on the 22nd of November of 2006, according to Budapest Treaty on the International Recognition of the Deposit of Microorganisms for the Purposes of Patent Procedure, in the International Depositary Authority "Colección Española de Cultivos Tipo" (Spanish Type Culture Collection) (CECT, for its Spanish acronym) at the address Parc Cientific Universitat de Valencia, Catedrático Agustín Escardino, 9. 46980, Paterna, (Valencia), Spain, by Microgaia Biotech, SL, with address at Parque Científico de Murcia, Campus Espinardo, Edificio S - Ctra. Madrid, Km. 388. 30100 Espinardo (Murcia, Spain).

The strain Trichoderma harzianum T78 has been identified by the depositor by means of the reference T 78, and it was given the deposit number CECT 20714 by the international Depositary Authority.

## Claims

1. Method for producing an organic substrate for promoting growth during plant germination and development, **characterized in that** it comprises:
(a) starting composting of vineyard pruning residues,
(b) adding chitin to the vineyard pruning residues during the composting thermophilic phase.
(c) inoculating a strain of the *Trichoderma harzianum* microorganism to the product resulting from the previous step once the composting thermophilic phase has finished,
(d) inoculating a mixture of species of the genus *Glomus* to the product resulting from the previous step during the composting maturing step.

2. Method according to claim 1, **characterized in that** the *Trichoderma harzianum* / mixture of species from the genus *Glomus* ratio is 1:1.

3. Method according to claim 1 or 2, **characterized in that** the strain of the microorganism *Trichoderma harzianum* is the strain *Trichoderma harzianum* T78 identified by the deposit number CECT 2071, and **in that** the mixture of species from the genus Glomus is a mixture of the species *Glomus intraradices, Glomus claroideum, Glomus mosseae* and *Glomus etunicatum.*

4. Organic substrate being obtainable according to any of claims 1 to 3.

5. Organic substrate according to claim 4 for use thereof in promoting growth during plant germination and development.

6. Organic substrate for use according to claim 5, **characterized in that** said plants are grown in soil crops or soilless cultures.
